(19) **Europäisches Patentamt**
**European Patent Office**
**Office européen des brevets**

(11) **EP 1 856 174 B1**

(12) **EUROPÄISCHE PATENTSCHRIFT**

(45) Veröffentlichungstag und Bekanntmachung des Hinweises auf die Patenterteilung:
**02.07.2008 Patentblatt 2008/27**

(51) Int Cl.:
*C08G 18/12* <sup>(2006.01)</sup>     *C08G 18/10* <sup>(2006.01)</sup>
*C08G 18/79* <sup>(2006.01)</sup>     *F16F 1/36* <sup>(2006.01)</sup>

(21) Anmeldenummer: 06708423.6

(22) Anmeldetag: **21.02.2006**

(86) Internationale Anmeldenummer:
**PCT/EP2006/060146**

(87) Internationale Veröffentlichungsnummer:
**WO 2006/089891 (31.08.2006 Gazette 2006/35)**

(54) **VERFAHREN ZUR HERSTELLUNG VON ZYLINDRISCHEN FORMKÖRPERN AUF DER BASIS VON ZELLIGEN POLYURETHANELASTOMEREN**

PROCESS FOR PRODUCING CYLINDRICAL MOULDINGS BASED ON CELLULAR POLYURETHANE ELASTOMERS

PROCEDE DE PRODUCTION DE CORPS MOULES CYLINDRIQUES A BASE D'ELASTOMERES POLYURETHANNE CELLULAIRES

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **22.02.2005   DE 102005008263**

(43) Veröffentlichungstag der Anmeldung:
**21.11.2007   Patentblatt 2007/47**

(73) Patentinhaber: **BASF SE**
**67056 Ludwigshafen (DE)**

(72) Erfinder:
• **HANSEN, Ralf**
**49080 Osnabrück (DE)**

• **JACKISCH, Peter**
**28844 Weyhe-Kirchweyhe (DE)**
• **MARTEN, Elke**
**49179 Ostercappeln (DE)**

(56) Entgegenhaltungen:
**EP-A- 0 449 331           WO-A-96/11219**
**DE-A1- 3 613 650         US-A- 5 382 646**

• **PATENT ABSTRACTS OF JAPAN Bd. 2000, Nr. 02, 29. Februar 2000 (2000-02-29) & JP 11 302355 A (DAINIPPON INK & CHEM INC), 2. November 1999 (1999-11-02)**

**EP 1 856 174 B1**

**Beschreibung**

Die Erfindung betrifft Verfahren zur Herstellung von zylindrischen, bevorzugt hohlen Formkörpern, insbesondere hohlen zylindrischen Automobilzusatzfedern bevorzugt für Kraftfahrzeugstoßdämpfer, insbesondere bevorzugt Kraftfahrzeugstoßdämpfer enthaltend hohle zylindrische Automobilzusatzfeder auf der Basis von zelligen Polyurethanelastomeren die gegebenenfalls Isocyanurat- und/oder Harnstoffstrukturen enthalten können mit einer Dichte nach DIN EN ISO 845 zwischen 300 und 900 kg/m$^3$, einer Zugfestigkeit nach DIN EN ISO 1798 von $\geq$ 2,0 N/mm$^2$, bevorzugt $\geq$ 2,5 N/mm$^2$, einer Bruchdehnung nach DIN EN ISO 1798 von $\geq$ 200 %, bevorzugt $\geq$ 350 % und einer Weiterreißfestigkeit nach DIN ISO 34-1 B (b) von $\geq$ 8 N/mm und besonders bevorzugt einen Druckverformungsrest (bei 70°C, 40 % Verformung, 22 Stunden) in Anlehnung an DIN EN ISO 1856 von kleiner 20 % durch Umsetzung eines Isocyanatgruppen aufweisenden Prepolymers (i) mit einer Vernetzerkomponente (ii) in einer Form.

Im Automobilbau sind Zusatzfedern allgemein bekannt, die in Automobilen beispielsweise innerhalb der Gesamtfederbeinkonstruktion, bestehend aus Stoßdämpfer, Spiralfeder und der Elastomerfeder, auf die Kolbenstange des Stoßdämpfers geschoben werden, und basieren auf zelligen, beispielsweise mikrozellige Polyisocyanat-Polyadditionsprodukte, üblicherweise Polyurethane und/oder Polyisocyanurate, die gegebenenfalls Harnstoffstrukturen enthalten können und erhältlich sind durch Umsetzung von Isocyanaten mit gegenüber Isocyanaten reaktiven Verbindungen.

Diese besonderen Produkte unterscheiden sich in ihrem Anforderungsprofil deutlich von üblichen Polyurethanschaumstoffen und weisen üblicherweise eine wesentlich höhere Dichte von üblicherweise 300 bis 900 kg/m$^3$ und besondere physikalischen Eigenschaften auf.

Im Einsatz sind diese Zusatzfedern erheblichen Belastungen über eine sehr lange Lebensdauer unterworfen. Dabei wird gefordert, dass die Zusatzfedern ein möglichst gleichbleibendes Leistungsprofil über die Lebensdauer des Automobils aufweisen.

Als besondere Anforderungen sind beispielsweise ein möglichst geringer Druckverformungsrest bei geringer Wasseraufnahme zu nennen. Zudem sind Bauteile aus mikrozellulären Polyurethanelastomeren als Zusatzfedern teilweise erhöhten Temperaturen in Verbindung mit Feuchtigkeit und dem Einfluss von Mikroben ausgesetzt. Aus diesem Grund ist eine möglichst gute Hydrolysebeständigkeit der Materialien anzustreben, damit sie über einen möglichst langen Zeitraum den an sie gestellten hohen mechanischen Ansprüchen genügen können. Temperaturen unterhalb der Glastemperatur des zelligen Polyurethanelastomers führen zum Verlust der elastischen Eigenschaften des Bauteils. Für spezielle Anwendungen ist es daher wünschenswert, die Kälteflexibilität der zelligen Polyurethanelastomeren weiter zu verbessern, ohne dabei die guten statischen und dynamischen Eigenschaften dieser Materialien negativ zu beeinflussen.

Weitere Anforderungen an die zelligen Polyisocyanat-Polyadditionsprodukte bestehen in der Erreichung exzellenter dynamisch-mechanischer und statisch-mechanischer Eigenschaften, beispielsweise von hervorragenden Zugfestigkeiten, Dehnungen, Weiterreißfestigkeiten und Druckverformungsresten, damit insbesondere die Polyurethanelastomere die hohen mechanischen Anforderungen, die an die Dämpfungselemente gestellt werden, über einen möglichst langen Zeitraum erfüllen können.

DE-A 36 13 650 und EP-A 178 562 beschreiben die Herstellung elastischer, kompakter oder zelliger Polyurethanelastomere. Die als Polyolkomponente verwendeten Polyetheresterdiole, hergestellt aus Polyoxytetramethylenglykolen mit Molekulargewichten von 162 bis 10000 und organischen Dicarbonsäuren, führen im Vergleich zur Verwendung reiner Polyesterpolyole zu verbesserten Hydrolysebeständigkeiten der Polyurethanelastomere. Nachteilig ist jedoch der hohe Preis der erfindungsgemäßen Polyetheresterpolyole. Zur Kälteflexibilität der erfindungsgemäß hergestellten Polyurethanelastomere wird in beiden Patenten keine Aussage gemacht.

Es ist allgemein bekannt, dass MDI-basierte und damit kostengünstige zellige PUR-Elastomere für Dämpfungselementanwendungen im Automobil einsetzbar sind (WO 96/11219). Zur Erzielung bestmöglicher mechanischer Eigenschaften werden üblicherweise Polyesterole als Weichphase eingesetzt, was eine geringe Hydrolysestabilität in heißem, feuchten Klima ($\geq$ 80°C) zur Folge hat. Gerade bei Dämpfungselementen in Automobilanwendungen werden durch die dynamische Belastung Temperaturen oberhalb von 80°C erreicht. Bei diesen erhöhten Temperaturen stellt die Hydrolysebeständigkeit der Schaumstoffe eine besondere Herausforderung dar.

Aufgabe der Erfindung war es somit, ein Verfahren zur Herstellung von zylindrischen bevorzugt hohlen Formkörpern, insbesondere Zusatzfedern, die in Automobilfahrwerken auf Kolbenstangen des Stoßdämpfers zum Einsatz kommen, zu entwickeln, die sich durch eine geringe Wasseraufnahme, einen geringen Druckverformungsrest, eine sehr feine Zellstruktur und gute dynamische und mechanische Eigenschaften auszeichnen, wobei insbesondere das hohe Niveau an Zugfestigkeit und Reißdehnung auch unter feucht warmen Bedingungen auf möglichst hohem Niveau erhalten bleiben soll. Dabei sollten die Formkörper, insbesondere die Zusatzfedern wirtschaftlich in der Verarbeitung sein.

Die Produkte der vorliegenden Erfindung, d.h. insbesondere die erfindungsgemäßen Zusatzfedern sind allgemein bekannt und vielfältig im Einsatz. Die Herstellung dieser Formkörper in entsprechenden Formen ist vielfältig beschrieben und dem Fachmann allgemein bekannt, z.B. aus DE-C 44 38 143. Gerade die vorstehend genannten Probleme sind in dem Bereich der Zusatzfedern aufgrund der speziellen Form, die üblicherweise einen Hohlraum aufweist, in dem die Kolbenstange des Automobilstoßdämpfers platziert wird, und der außerordentlichen Langzeitbelastung im Automobilfahrwerk von besonderer Bedeutung.

Die obenstehenden Aufgaben konnten dadurch gelöst werden, dass das Isocyanatgruppen ausweisende Prepolymer (i), bevorzugt mit einem NCO-Gehalt zwischen 1 Gew.-% und 30 Gew.-%, besonders bevorzugt zwischen 6 Gew.-% und 20 Gew.-%, insbesondere 13 und 20 Gew.-%, insbesondere bevorzugt zwischen 14 Gew.-% und 20 Gew.-% basiert auf Methylendiphenyldiisocyanat (MDI) und (b1) Polyetherdiol mit einem Molekulargewicht zwischen 1500 g/mol und 3000 g/mol auf der Basis von Propylenoxid und/oder Ethylenoxid und die Vernetzerkomponente (ii) enthält Polyetheralkohol (b2) mit einer nominellen Funktionalität gegenüber Isocyanaten von 2 bis 3 und einem Molekulargewicht zwischen 1500 g/mol und 6000 g/mol auf der Basis von Propylenoxid und/oder Ethylenoxid, sowie Diol (c2) mit einem Molekulargewicht zwischen 62 g/mol und 499 g/mol, bevorzugt Butan-1,4-diol und/oder Ethylenglykol, Wasser (d) und Katalysatoren (e), und man das Prepolymer (i) und die Vernetzerkomponente (ii) mittels einer Hochdruckmaschine, die einen Mischkopf aufweist, in dem die Komponenten (i) und (ii) gemischt werden, in die Form füllt, wobei der Mischkopfausstoß zwischen 15 und 60 g/s beträgt.

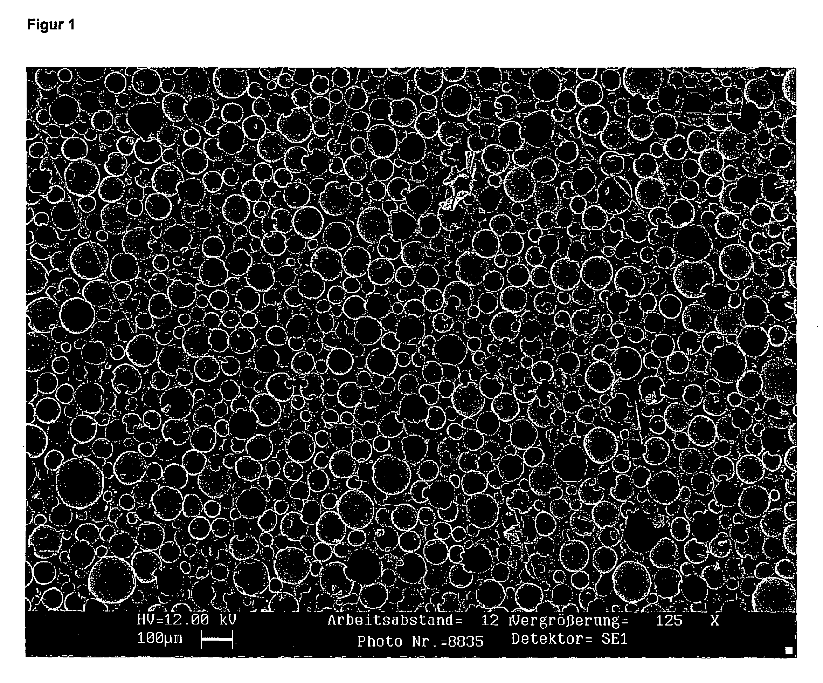

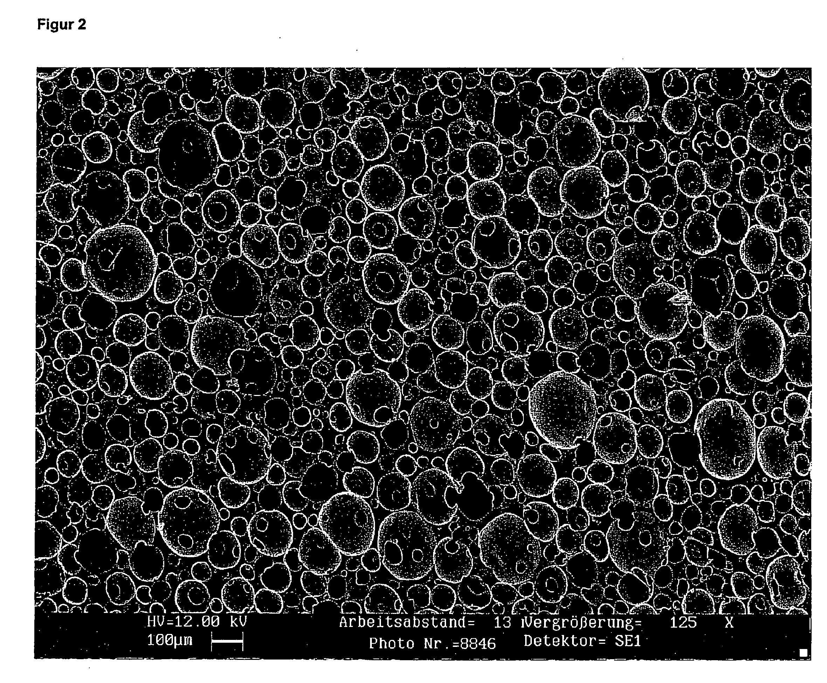

Mit der erfindungsgemäßen Hochdrucktechnologie konnten, insbesondere unter Berücksichtigung der bevorzugten Prozeßparameter ein sehr feinzelliger Schaum hergestellt werden. Die Figur 1 zeigt eine REM- Aufnahme eines Schaums, der mittels Hochdruckmaschine hergestellt wurde. Figur 2 stellt die REM- Aufnahme eines Schaums dar, der mittels Niederdruckmaschine hergestellt wurde. Der Unterschied in der Zellstruktur ist deutlich sichtbar. Mit der Hochdruckmaschine konnte eine Zelldichte von 204 Zellen / $mm^2$ erreicht werden. Im Gegensatz hierzu wurden mit der Niederdruckmaschine nur 140 Zellen / $mm^2$ erreicht.

Zudem führt der Einsatz der Hochdruckmaschinen zu Formkörpern mit besseren physikalische Eigenschaften, insbesondere verbesserten Druckverformungsresten. Hierbei konnten mit der Hochdrucktechnologie Druckverformungsreste von 58 % erreicht werden, wobei hingegen bei der Niederdrucktechnologie nur Druckverformungsreste von 75 - 80 % erreicht wurden.

Der Druckverformungsrest wurde bei 80°C in Abwandlung zur DIN 53 572 unter Verwendung von 18 mm hohen Abstandsstücken und Prüfkörpern mit einer Grundfläche von 40 x 40 mm und einer Höhe von 30 $\pm$ 1 mm gemessen. Die Berechnung des Druckverformungsrestes (DVR) erfolgte nach der Gleichung

$$DVR = [(H_0{-}H_2)/(H_0{-}H_1)]*100[\%]$$

in der bedeutet

$H_0$     die ursprüngliche Höhe des Prüfkörpers in mm,
$H_1$     die Höhe des Prüfkörpers in verformtem Zustand in mm,
$H_2$     die Höhe des Prüfkörpers nach der Entspannung in mm.

Ferner bietet die Hochdrucktechnologie den Vorteil, dass Bauteile mit geringem Raumgewicht von z.B. 400 g/l noch geschäumt werden. Bei der Niederdrucktechnologie sind Bauteile mit einer Dichte kleiner 450 g/l nur schwierig zugänglich. Dies gilt insbesondere für lange schlanke zylinderische Formkörper. Neben den realen Bauteilen kann dieser Effekt auch an freigeschäumten Becherschäumen, die als Referenz für das Schaumsteigverhalten nach festgelegten Parametern, hergestellt werden, beobachtet werden. Bei der Hochdrucktechnologie wird eine maximale Becherschaumhöhe von 170 mm erreicht, bei der Niederdrucktechnologie werden hingegen nur 160 mm erreicht.

Die Komponenten (i) und (ii) weisen in dem Mischkopf bevorzugt jeweils eine Temperatur zwischen 25°C und 60°C auf.

Die Mischkopfauslauftemperatur, d.h. die Temperatur, die die gemischten Komponenten (i) und (ii) aufweisen, liegt bevorzugt zwischen 40°C und 60°C.

Die Innenwand der Form weist bevorzugt eine Temperatur zwischen 40°C und 90°C auf. Dies führt zu einer wesentlich geringeren Wasseraufnahme des Formkörpers.

Die Hochdruckmaschine weist bevorzugt einen Arbeitsdruck, insbesondere einen Druck, mit dem die Komponenten (i) und (ii) in den Mischkopf gedrückt werden, zwischen 140 und 200 bar auf.

Neben der verfahrenstechnischen Optimierung wurden in der vorliegenden Erfindung außerdem die Rohstoffkomponenten gezielt angepasst und verbessert.

Durch Auswahl des Isocyanats, d.h. des MDI, und einem Polyetherdiol auf Basis von Ethylenoxid und/oder Propylenoxid konnte neben einer Optimierung des eingangs dargestellten Eigenschaftsprofils auch besonders vorteilhafte, geringe Rohstoffkosten realisiert werden. Die gewünschte Federhärte kann durch einen bevorzugten Hartsegmentanteil von 30 bis 50 Gew.-% erzielt werden. Die Berechnung des Hartsegmentanteils (%HS) erfolgt dabei unter Annahme eines vollständigen Umsatzes der Polyurethan bildenden Reaktanden und eines vollkommenen $CO_2$-Austausches nach folgender Gleichung:

$$\% HS = \frac{(m_{MDI} + m_{C1}) * W_P + (m_{C2}) * W_V - (m_{H2O} * W_V * 44/18)}{(m_{MDI} + m_{C1} + m_{b1}) * W_P + (m_{C2} + m_{H2O} + m_{b2}) * W_V} * 100$$

$\% HS$:     Massenanteil an Hartsegment im zylindrischen Formkörper in Gew.-%

$m_{MDI}$:     Massenanteil an MDI (a) im Prepolymer (i)in g/g

$m_{C1}$:     Massenanteil an Kettenverlängerer (c1) im Prepolymer (i)in g/g

$W_P$:     Massenanteil des Prepolymers (i) im zylindrischen Formkörper, d.h.bezogen auf die Gesamtmasse von Prepolymer (i) und Vernetzerkomponente (ii), in g/g

$m_{C2}$:     Masseanteil an Kettenverlängerer (c2) in der Vemetzerkomponente (ii)in g/g

$m_{H2O}$:     Massenanteil an Wasser in der Vemetzerkomponente(ii) in g/g

$W_V$:     Massenanteil der Vernetzerkomponente (ii) im zylindrischen Formkörper, d.h. bezogen auf die Gesamtmasse von Prepolymer (i) und Vernetzerkomponente (ii), in g/g

$m_{b1}$:     Massenanteil an Polyol b1 im Prepolymer (i) in g/g

$m_{b2}$:     Massenanteil an Polyol b2 in der Vernetzerkomponente (ii) in g/g

Es kann gerade zur Herstellung der erfindungsgemäßen Formkörper, insbesondere der Zusatzfedern von besonderem Vorteil sein, wenn man die zylindrischen Formkörper nach der Entformung aus der Form bei einer Temperatur zwischen 80°C und 130°C für eine Dauer zwischen 3 und 48 Stunden tempert, d.h. erhitzt. Dadurch kann der Druckverformungsrest in Anlehnung an DIN EN ISO 1856 (bei 70°C, 40 % Verformung, 22 Stunden) verringert werden.

Die Herstellung der Formteile wird bevorzugt bei einem NCO/OH-Verhältnis von 0,85 bis 1,2 (=Index) durchgeführt. Die erwärmten Ausgangskomponenten werden bevorzugt gemischt und in einer der gewünschten Formteildichte entsprechenden Menge in ein beheiztes, bevorzugt dichtschließendes Formwerkzeug gebracht.

Die Formteile sind üblicherweise nach 5 bis 20 Minuten ausgehärtet und damit entformbar.

Die Menge des in das Formwerkzeug eingebrachten Reaktionsgemisches wird bevorzugt so bemessen, dass die erhaltenen Formkörper die bereits dargestellte Dichte aufweisen. Die erfindungsgemäß erhältlichen zelligen Polyisocyanat-Polyadditionsprodukte weisen bevorzugt eine Dichte nach DIN EN ISO 845 zwischen 300 und 900 kg/m$^3$, besonders bevorzugt 300 bis 600 kg/m$^3$ auf.

Die Verdichtungsgrade zur Herstellung der Formkörper liegen bevorzugt zwischen 1,1 und 5, vorzugsweise zwischen 1,5 und 3.

Zur Verbesserung der Entformung der erfindungsgemäß hergestellten Formkörper hat es sich als vorteilhaft erwiesen, die Formwerkzeuginnenflächen zumindest zu Beginn einer Produktionsreihe mit üblichen äußeren Formtrennmitteln, beispielsweise mit wässrigen Seifenlösungen auf Wachsbasis oder insbesondere auf Silikonbasis, zu beschichten.

Die Entformzeiten betragen in Abhängigkeit von der Größe und Geometrie des Formteils durchschnittlich 5 bis 20 Minuten.

Nach der Herstellung der Formteile in der Form können die Formteile bevorzugt für eine Dauer von 3 bis 48 Stunden bei Temperatur zwischen 80°C und 130°C getempert werden.

Neben der verfahrenstechnischen Optimierung, d.h. den spezifizierten Einsatz der Hochdruckmaschine konnte durch die erfindungsgemäßen Polyole in der Prepolymer- und Vernetzerkomponente eine weitere Optimierung gemäß der eingangs dargestellten Aufgaben erreicht werden.

Bei der Auswahl der Polyetherole bestand die Herausforderung darin, geeignete Polyole zu wählen, die einen Schaum ergeben, der ein hohes mechanisches Niveau sowohl bei Normklima als auch in heißem, feuchten Klima ergibt und außerdem gute Tieftemperatureigenschaften aufweist. Dabei erwies sich überraschender Weise die mittlere Polyolmolmasse $\overline{M}$(Polyol) der Polyetherole (b) als die bestimmende Größe. Mittlere Polyolmolmassen von kleiner als 3900 g/mol ergaben Schäume, deren Zugfestigkeit auch nach 70-tägiger Lagerung in 80°C temperiertem Wasser nur um etwa 40 % (bezogen auf den Anfangswert) abgesunken waren. Schäume mit einer mittleren Polyolmolmasse oberhalb von 3900 g/mol ergaben Schäume, deren Zugfestigkeiten während der oben genannten Lagerbedingungen deutlich stärker abfielen (um mehr als 60 %, bezogen auf den Anfangswert). Mit sinkender Polyolmolmasse verschlechtern sich allgemein die Tieftemperatureigenschaften. Für die erfindungsgemäßen Schäume wurden vergleichsweise gute Tieftemperatureigenschaften gemessen (Maximum des Verlustmoduls G"$_{max}$= -53°C, 1 Hz Messfrequenz, Heizrate 2°C/min, ISO 6721-7).

Das erfindungsgemäße Verfahren zur Herstellung der erfindungsgemäßen Formkörper erfolgt deshalb bevorzugt derart, dass man in einer Form

(i) ein Isocyanatgruppen ausweisendes Prepolymer bevorzugt mit einem NCO-Gehalt zwischen 1 Gew.-% und 30 Gew.-%, besonders bevorzugt zwischen 6 Gew-% und 20 Gew.-%, insbesondere zwischen 13 Gew.-% und 20 Gew.-%, insbesondere bevorzugt zwischen 14 und 20 Gew.-% auf der Basis von (a) Diisocyanatodiphenylmethan (MDI), und

(b1) mindestens einem Polyetherdiol mit einem Molekulargewicht zwischen 1500 g/mol und 3000 g/mol auf der Basis von Ethylenoxid und/oder Propylenoxid,

mit

(ii) einer Vernetzerkomponente enthaltend

(b2) Polyetheralkohole mit einer nominellen Funktionalität gegenüber Isocyanaten von 2 bis 3 und einem Molekulargewicht zwischen 1500 g/mol und 6000 g/mol auf der Basis von Ethylenoxid und/oder Propylenoxid, (c2) Diol mit einem Molekulargewicht zwischen 62 g/mol und 499 g/mol, bevorzugt Butan-1,4-diol und/oder Ethylenglykol, (d) Wasser und (e) Katalysatoren,

umsetzt, wobei die im zylindrischen, bevorzugt hohlen Formkörper enthaltenen Polyole (b) enthaltend (b1) und (b2) sowie gegebenenfalls weitere Polyole (b), bevorzugt die Polyole (b1) und (b2) eine mittlere Polyolmolmasse von kleiner als 3900 g/mol besitzen, bevorzugt zwischen 2000 g/mol und 3800 g/mol, besonders bevorzugt zwischen 3000 g/mol und 3700 g/mol, wobei sich die mittlere Polyolmolmasse $\overline{M}$(Polyol) berechnet nach der folgenden Formel:

$$\overline{M}(Polyol) = \frac{(M_{b11} * m_{b11} + \ldots + M_{b1n} * m_{b1n}) * W_P + (M_{b21} * m_{b21} + \ldots + M_{b2n} * m_{b2n}) * W_v}{(m_{b11} + \ldots + m_{b1n}) * W_P + (m_{b21} + \ldots + m_{b2n}) * W_v}$$

mit den folgenden Bedeutungen:

$\overline{M}$ (Polyol) : mittlere Polyolmolmasse, insbesondere mittlere Polyolmolmasse der in den Formkörpern enthaltenen Polyole (b) umfassend (b1) und (b2) sowie gegebenenfalls weitere Polyole (b), insbesondere mittlere Polyolmolmasse der Polyetherole (b1) und (b2), in g/mol

$M_{b11}$ (bzw. $M_{b1n}$): Molmasse von Polyol b11 (bzw. Polyol b1n) im Prepolymer (i) in g/mol

$m_{b11}$ (bzw. $m_{b1n}$): Massenanteil von Polyol b11 (bzw. Polyol b1n) imPrepolymer (i) in g/g

$W_P$: Massenanteil des Prepolymers (i) im zylindrischen Formkörper, d.h. bezogen auf die Gesamtmasse von Prepolymer (i) und Vernetzerkomponente (ii), in g/g

$M_{b21}$ (bzw. $M_{b2n}$): Molmasse von Polyol b21 (bzw. Polyol b2n) in der Vernetzerkomponente (ii) in g/mol

$m_{b21}$ (bzw. $m_{b2n}$): Massenanteil von Polyol b21 (bzw. Polyol b2n) in der Vernetzerkomponente (ii) in g/g

$W_V$: Massenanteil der Vernetzerkomponente (ii) im zylindrischen Formkörper, d.h. bezogen auf die Gesamtmasse von Prepolymer (i) und Vemetzerkomponente (ii), in g/g.

Das Molekulargewicht ist bevorzugt das zahlenmittlere Molekulargewicht.

Gemäß des erfindungsgemäßen Verfahrens wird ein Isocyanatgruppen aufweisendes Prepolymer (i), das bevorzugt den eingangs dargestellten NCO-Gehalt aufweist, mit einer Vernetzerkomponente (ii) umgesetzt. In der Vernetzerkomponente sind die gegenüber Isocyanaten reaktiven Verbindungen, d.h. vor allem (b2) und bevorzugt (c2) Kettenverlängerer und/oder Vernetzungmittel sowie (d) Wasser, (e) Katalysatoren und gegebenenfalls weitere gegenüber Isocyanaten reaktive Verbindungen (b) und gegebenenfalls Treibmittel (f) und/oder Hilfsmittel (g) enthalten. Diese Einsatzkomponenten werden an späterer Stelle ausführlich beschrieben.

Das Prepolymer basiert auf der Umsetzung von (a) Isocyanat, erfindungsgemäß MDI sowie gegebenenfalls weiteren Isocyanaten, bevorzugt ausschließlich MDI, mit (b1) Polyetherdiol und bevorzugt dem (c1) Diol, bevorzugt Glykol. Dabei können gegebenenfalls weitere gegenüber Isocyanaten reaktive Verbindungen (b) und/oder (c) zusätzlich zu (b1) und bevorzugt (c1) eingesetzt werden. Die Herstellung des Prepolymeren (i) kann bevorzugt derart erfolgen, dass man das Polyetherdiol als (b1) auf der Basis von Propylenoxid und/oder Ethylenoxid und gegebenenfalls das Diol als (c1) mit dem MDI als (a) im Überschuss üblicherweise bei Temperaturen von 70°C bis 100°C, vorzugsweise von 70°C bis 90°C, zur Reaktion bringt. Die Reaktionszeit ist auf das Erreichen des theoretischen NCO-Gehaltes bemessen.

Als (b1) Polyetherdiol mit einem Molekulargewicht zwischen 1500 g/mol und 3000 g/mol auf der Basis von Propylenoxid und/oder Ethylenoxidkönnen zur Herstellung der Prepolymere (i) können nach allgemein bekannten Verfahren mit Ethylenoxid und/oder Propylenxid alkoxylierte Startsubstanzen, bevorzugt Diole, beispielsweise Ethylenglykol, Propylenglykol, Diethylenglykol, Dipropylenglykol, Triethylenglykol, Tripropylenglykol, Butan-1,4-diol, Hexan-1,6-diol, besonders bevorzugt Propylenglykol eingesetzt werden. Die Polyetherdiole können bevorzugt propoxylierte Diole sein, es können aber auch ethoxylierte Diole oder gemischte Polyetherdiole eingesetzt werden, wobei die Alkylenoxide blockweise oder statistisch in dem Polyetherdiol (b1) angeordnet sein können. Wie auch an späterer Stelle ausgeführt, können gegebenenfalls zusätzlich zu den Polyetherdiolen (b1) weitere Polyetheralkohole eingesetzt werden, beispielsweise auch Polyethermonoalkohole, die bei der Herstellung der Polyetherdiole entstehen. Die mittlere tatsächliche Funktionalität der insgesamt zur Herstellung des Prepolymers (i) eingesetzten gegenüber Isocyanaten reaktiven Polyetherdiole (b1) beträgt bevorzugt zwischen 1,8 und 2,0.

Als (c1) können Diole, eingesetzt werden, bevorzugt Diethylenglykol, Triethylenglykol, Dipropylenglykol und/oder Triethylenglykol, besonders bevorzugt Dipropylenglykol und/oder Tripropylenglykol, insbesondere Tripropylenglykol.

Bevorzugt sind somit zylindrische, bevorzugt hohle Formkörper, bei denen das Isocyanatgruppen aufweisende Prepolymer (i) basiert auf der Umsetzung von (a) Diisocyanatodiphenylmethan (MDI), (b1) Polyetherdiolen mit einem Molekulargewicht zwischen 1500 g/mol und 3000 g/mol, bevorzugt 2000 g/mol auf der Basis von Propylenoxid und/oder Ethylenoxid sowie (c1) Diol mit einem Molekulargewicht zwischen 62 g/mol und 499 g/mol, bevorzugt 106 g/mol und 499 g/mol, bevorzugt Diethylenglykol, Triethylenglykol, Dipropylenglykol und/oder Triethylenglykol, besonders bevorzugt Dipropylenglykol und/oder Tripropylenglykol, insbesondere Tripropylenglykol (als Kettenverlängerungsmittel (c1)).

Die Vemetzerkomponente (ii) enthält erfindungsgemäß (b2) als gegenüber Isocyanten reaktive Verbindung. Gegebenenfalls können in der Vernetzerkomponente (ii) zusätzlich zu (b2) weitere gegenüber Isocyanaten reaktive Verbindungen (b) enthalten sein, die nicht unter die Definition von (b2) fallen, sofern insgesamt die erfindungsgemäße mittlere Polymolmasse über alle Polyole (b) erfüllt wird. Als (b2) Polyetheralkohole mit einer nominellen Funktionalität gegenüber Isocyanaten von 2 bis 3, d.h. bevorzugt mit nominell 2 oder 3 Hydroxylgruppen und einem Molekulargewicht zwischen 1500 g/mol und 6000 g/mol auf der Basis von Propylenoxid und/oder Ethylenoxidkönnen können zur Herstellung der Vemetzerkomponente (ii) nach allgemein bekannten Verfahren mit Ethylenoxid und/oder Propylenxid alkoxylierte Startsubstanzen, bevorzugt Diole und/oder Triole, beispielsweise Ethylenglykol, Propylenglykol, Diethylenglykol, Diproyplenglykol, Triethylenglykol, Tripropylenglykol, Butan-1,4-diol, Hexan-1,6-diol, Glycerin, Trimethylolpropan, bevorzugt Propylenglykol und Glycerin eingesetzt werden. Die Polyetherdi- und/oder triole können propoxylierte Di- und/oder Triole sein, es können aber auch ethoxylierte Di- und/oder Triole oder gemischte Polyetherdi- und/oder Triole eingesetzt werden, wobei die Alkylenoxide blockweise oder statistisch in dem Polyetheralkohol angeordnet sein können. Unter dem Ausdruck "nominell" bezüglich der Funktionalität gegenüber Isocyanaten ist zu verstehen, dass die Startsubstanz zur Herstellung der Polyetheralkohole diese Anzahl an gegenüber Isocyanaten reaktiven Funktionen, bevorzugt Hydroxylgruppen aufweist. Aufgrund der Alkoxylierung der Startsubstanz ist die tatsächliche mittlere Funktionalität der Polyetheralkohole üblicherweise geringer. Alternativ oder ergänzend zu dem Merkmal "nominelle Funktionalität" kann man auch die mittlere tatsächliche Funktionalität angeben, die im vorliegenden Falle bevorzugt zwischen 1,6 und 2,9 beträgt. Bei den Polyetheralkoholen (b2) kann es um eine Mischung von Polyetheralkolen handeln, wobei die Mischung die erfindungsgemäße Charakteriatik (z.B. Funktionalität von 2 bis 3 und Molekulargewicht zwischen 1500 und 6000 g/mol) aufweist. In dem Polyetheralkohol (b2) sind bevorzugt Ethylenoxideinheiten endständig angeordnet.

Als (c2) Diole, d.h. als Kettenverlängerungmittel bevorzugt mit einem Molekulargewicht zwischen 62 g/mol und 499 g/mol können zur Herstellung der Vernetzerkomponente (ii) allgemein bekannte Diole mit einem entsprechenden Molekulargewicht eingesetzt werden, beispielsweise Ethylenglykol, Propylenglykol, Diethylenglykol, Dipropylenglykol, Triethylenglykol, Tripropylenglykol, Butan-1,4-diol, Hexan-1,6-diol, bevorzugt Butan-1,4-diol und/oder Ethylenglykol.

Besonders bevorzugt sind dabei bevorzugt hohle zylindrische Formkörper, bei denen die Vernetzerkomponente (ii) als bevorzugt physikalisches Treibmittel (f) Heptan, n-Pentan, 2-Methylbutan und/oder Cyclopentan enthält. Durch die zusätzliche Treibwirkung (zusätzlich zum erfindungsgemäßen Wasser (d)) wird sichergestellt, dass auch komplex geformte Zusatzfedern und/oder Formkörper mit Raumgewichten zwischen 300 und 450 g/l gleichmäßig ausgeschäumt werden.

Die erfindungsgemäßen zylindrischen bevorzugt hohlen Formkörper weisen bevorzugt eine Höhe zwischen 25 mm und 1000 mm, besonders bevorzugt 25 mm und 200 mm, einen maximalen äußeren Durchmesser zwischen 40 mm und 700 mm, besonders bevorzugt zwischen 40 mm und 150 mm und einen minimalen Durchmesser des Hohlraums zwischen 0 mm und 90 mm, besonders bevorzugt zwischen 8 mm und 35 mm auf.

Die erfindungsgemäßen zylindrischen bevorzugt hohlen Formkörper weisen bevorzugt eine Glastemperatur kleiner -33°C, besonders bevorzugt kleiner -40°C auf (ISO 6721-7, 1 Hz Messfrequenz, Heizrate 2°C/min, Maximum des Verlustmoduls $G''_{max}$).

Die erfindungsgemäßen zylindrischen bevorzugt hohlen Formkörper weisen bei einer Dichte von 500 g/l bevorzugt eine Shore A Oberflächenhärte nach DIN 53505-A von 30 bis 80 bevorzugt zwischen 40 und 65 auf.

Die erfindungsgemäßen Formkörper, d.h. die zelligen Polyisocyanat-Polyadditionsprodukte, bevorzugt die mikrozelligen Polyurethanelastomere, weisen demnach nicht nur exzellente mechanische und dynamische Eigenschaften auf, insbesondere die Beständigkeit in feucht warmen Klima konnte bei guter Kälteflexibilität erfindungsgemäß deutlich verbessert werden. Insbesondere diese Kombination besonders vorteilhafter Eigenschaften konnte bislang in dieser Form nicht erreicht werden.

Bevorzugt wird man dabei in einem zweistufigen Verfahren in der ersten Stufe das Isocyanatgruppen aufweisende Prepolymer (i) herstellen durch Umsetzung von (a) Diisocyanatodiphenylmethan (MDI) mit (b1) mindestens einem Polyetherdiolen mit einem Molekulargewicht zwischen 1500 g/mol und 3000 g/mol auf der Basis von Ethylenoxid und/oder Propylenoxid, und (c1) mindestens einem Diol, bevorzugt Glykol, bevorzugt Dipropylenglykol und/oder Tripropylenglykol, insbesondere Tripropylenglykol und dieses Prepolymer (i) in der zweiten Stufe in einer Form mit der Vernetzerkomponente (ii) umsetzen.

Dabei basiert das Prepolymer (i) bevorzugt auf Diisocyanatodiphenylmethan (MDI) und Isocyanaten, die Carbodiimidstrukturen und/ oder Uretoniminstrukturen aufweisen.

Zu den Ausgangskomponenten enthaltend in dem erfindungsgemäßen Reaktionsgemisch kann zudem folgendes ausgeführt werden:

Als Isocyanat (a) wird erfindungsgemäß 2,2'-, 2,4'- und/oder 4,4'-Diphenylmethandiisocyanat (MDI) eingesetzt, z.B. MDI enthaltend 75 bis 85 Gew.%, bevorzugt 80 Gew.-% 4,4'-Methylendiphenyldüsocyanat und 15 bis 25 Gew.-%, bevorzugt 20 Gew.-% 2,4'- Methylendiphenyldüsocyanat. Dabei kann das MDI gegebenenfalls modifiziert eingesetzt werden. Gegebenenfalls können zusätzlich zum MDI weitere, allgemein bekannte (cyclo)aliphatische und/oder aromatische Polyisocyanate eingesetzt werden. In Frage kommen dabei besonders aromatische Diisocyanate, vorzugsweise 1,5-Naphthylendüsocyanat (NDI), 2,4- und/oder 2,6-Toluylendüsocyanat (TDI), 3,3'-Dimethyl-diphenyl-diisocyanat, 1,2-Diphenylethandiisocyanat, p-Phenylendüsocyanat und/oder (cyclo)aliphatische Isocyanate wie z.B. 1,6-Hexamethylendiisocyanat, 1-Isocyanato-3,3,5-trimethyl-5-isocyanatomethylcyclohexan und/oder Polyisocyanate wie z.B. Polyphenylpolymethylenpolyisocyanate. Die Isocyanate können in Form der reinen Verbindung, in Mischungen und/oder in modifizierter Form, beispielsweise in Form von Uretdionen, Isocyanuraten, Allophanaten oder Biureten, vorzugsweise in Form von Urethan- und Isocyanatgruppen enthaltenden Umsetzungsprodukten, sogenannten Isocyanat-Prepolymeren, eingesetzt werden.

Als gegenüber Isocyanaten reaktive Verbindungen (b) werden in dieser Schrift per Definition Alkohole mit zwischen 1 und 8 Hydroxylgruppen und einem Molekulargewicht zwischen 500 g/mol und 8000 g/mol bezeichnet. Als gegenüber Isocyanaten reaktive Verbindungen (b) kommen die bereits dargestellten Polyetheralkohole (b1) im Prepolymer (i) sowie (b2) in der Vernetzerkomponente (ii) zum Einsatz. Diese können gegebenenfalls zusammen mit allgemein bekannten Polyhydroxylverbindungen, bevorzugt Polyetheralkhole und/oder Polyesteralkohole, besonders bevorzugt Polyetheralkohole eingesetzt werden, bevorzugt solchen mit einer Funktionalität gegenüber Isocyanatgruppen von 2 bis 3 und bevorzugt einem Molekulargewicht von 1500 bis 6000 g/mol. Bevorzugt beträgt der Gewichtsanteil der Polyetherdiole (b1) mit einem Molekulargewicht zwischen 1500 g/mol und 3000 g/mol auf der Basis von Propylenoxid und/oder Ethylenoxid an dem Gesamtgewicht der zur Herstellung des Prepolymers (i) eingesetzten gegenüber Isocyanaten reaktiven Verbindungen (b) mindestens 70 Gew.-%, besonders bevorzugt mindestens 80 Gew.-%, insbesondere mindestens 95 Gew.-%, jeweils bezogen auf das Gesamtgewicht der zur Herstellung des Prepolymers eingesetzten gegenüber Isocyanaten reaktiven Verbindungen (b). Bevorzugt beträgt der Gewichtsanteil der Polyetheralkohole (b2) mit einer nominellen Funktionalität gegenüber Isocyanaten von 2 bis 3 und einem Molekulargewicht zwischen 1500 g/mol und 6000 g/mol auf der Basis von Propylenoxid und/oder Ethylenoxid an dem Gesamtgewicht der in der Vernetzerkomponente (ii) eingesetzten gegenüber Isocyanaten reaktiven Verbindungen (b) mindestens 60 Gew.-%, besonders bevorzugt mindestens 70 Gew.-%, insbesondere mindestens 80 Gew.-%, jeweils bezogen auf das Gesamtgewicht der gegenüber Isocyanaten reaktiven Verbindungen in der Vernetzerkomponente (ii). Besonders bevorzugt werden ausschließlich die erfindungsgemäßen Polyetheralkohle (b1) und (b2) als Komponente (b) eingesetzt.

Zusätzlich zu den bereits beschriebenen gegenüber Isocyanaten reaktiven Komponenten (c1) und (c2) können des weiteren Kettenverlängerungs- und/oder Vernetzungsmitteln (c) mit einem Molekulargewicht von kleiner 500 g/mol, bevorzugt 62 g/mol bis 499 g/mol eingesetzt werden, beispielsweise ausgewählt aus der Gruppe der di- und/oder trifunktionellen Alkohole, di- bis tetrafunktionellen Polyoxyalkylen-polyole und der alkylsubstituierten aromatischen Diamine oder von Mischungen aus mindestens zwei der genannten Kettenverlängerungs- und/oder Vernetzungsmittel. Als (c) können beispielsweise Alkandiole mit 2 bis 12, bevorzugt 2, 4, oder 6 Kohlenstoffatomen verwendet werden, z.B. Ethan-, 1,3-Propan-, 1,5-Pentan-, 1,6-Hexan-, 1,7-Heptan-, 1,8-Octan-, 1,9-Nonan-, 1,10-Decandiol und vorzugsweise 1,4-Butandiol, Dialkylenglykole mit 4 bis 8 Kohlenstoffatomen, wie z.B. Diethylenglykol und Dipropylenglykol und/oder di- bis tetrafunktionelle Polyoxyalkylen-polyole. Geeignet sind jedoch auch verzweigtkettige und/oder ungesättigte Alkandiole mit üblicherweise nicht mehr als 12 Kohlenstoffatomen, wie z.B. 1,2-Propandiol, 2-Methyl-, 2,2-Dimethyl-propandiol-1,3, 2-Butyl-2-ethylpropandiol-1,3, Buten-2-diol-1,4 und Butin-2-diol-1,4, Diester der Terephthalsäure mit Glykolen mit 2 bis 4 Kohlenstoffatomen, wie z.B. Terephthalsäure-bis-ethylenglykol- oder-butandiol-1,4, Hydroxyalkylenether des Hydrochinons oder Resorcins, wie z.B. 1,4-Di-(b-hydroxyethyl)-hydrochinon oder 1,3-Di(b-hydroxyethyl)-resorcin, Alkanolamine mit 2 bis 12 Kohlenstoffatomen, wie z.B. Ethanolamin, 2-Aminopropanoi und 3-Amino-2,2-dimethylpropanol, N-Alkyldialkanolamine, wie z.B. N-Methyl- und N-Ethyldiethanolamin. Als höherfunktionelle Vernetzungsmittel (c) seien beispielsweise tri- und höherfunktionelle Alkohole, wie z.B. Glycerin, Trimethylolpropan, Pentaerythrit und Trihydroxycyclohexane sowie Trialkanolamine, wie z.B. Triethanolamin genannt. Als Kettenverlängerungsmittel vorzüg-

7

lich bewährt haben sich und daher bevorzugt verwendet werden alkylsubstituierte aromatische Polyamine mit Molekulargewichten vorzugsweise von 122 bis 400, insbesondere primäre aromatische Diamine, die in ortho-Stellung zu den Aminogruppen mindestens einen Alkylsubstituenten besitzen, welcher die Reaktivität der Aminogruppe durch sterische Hinderung vermindert, die bei Raumtemperatur flüssig und mit den höhermolekularen, bevorzugt mindestens difunktionellen Verbindungen (b) unter den Verarbeitungsbedingungen zumindest teilweise, vorzugsweise jedoch vollständig mischbar sind. Zur Herstellung der erfindungsgemäßen Formkörper können die technisch gut zugänglichen 1,3,5-Triethyl-2,4-phenylendiamin, 1-Methyl-3,5-diethyl-2,4-phenylendiamin, Mischungen aus 1-Methyl-3,5-diethyl-2,4- und -2,6-phenylendiaminen, sogenanntes DETDA, Isomerengemische aus 3,3'-di- oder 3,3',5,5'-tetraalkylsubstituierten 4,4'-Diaminodiphenylmethanen mit 1 bis 4 C-Atomen im Alkylrest, insbesondere Methyl-, Ethyl- und Isopropylreste gebunden enthaltende 3,3',5,5'-tetraalkylsubstituierte 4,4'-Diamino-diphenylmethane sowie Gemische aus den genannten tetraalkylsubstituierten 4,4'-Diamino-diphenylmethanen und DETDA verwendet werden. Zur Erzielung spezieller mechanischer Eigenschaften kann es auch zweckmäßig sein, die alkylsubstituierten aromatischen Polyamine im Gemisch mit den vorgenannten niedermolekularen mehrwertigen Alkoholen, vorzugsweise zwei- und/oder dreiwertigen Alkoholen oder Dialkylenglykolen zu verwenden.

Erfindungsgemäß wird die Herstellung der zelligen Polyisocyanat-Polyadditionsprodukte bevorzugt in Gegenwart von Wasser (d) durchgeführt. Das Wasser wirkt sowohl als Vernetzer unter Bildung von Harnstoffgruppen als auch aufgrund der Reaktion mit Isocyanatgruppen unter Bildung von Kohlendioxid als Treibmittel. Aufgrund dieser doppelten Funktion wird es in dieser Schrift getrennt von (c) und (f) aufgeführt. Per Definition enthalten die Komponenten (c) und (f) somit kein Wasser, das per Definition ausschließlich als (d) aufgeführt wird. Die Wassermengen, die zweckmäßigerweise verwendet werden können, betragen 0,01 bis 3 Gew.-%, vorzugsweise 0,1 bis 0,6 Gew.-%, bezogen auf das Gewicht der Vernetzerkomponente (ii).

Zur Beschleunigung der Reaktion können dem Reaktionsansatz sowohl bei der Herstellung eines Prepolymeren als auch gegebenenfalls bei der Umsetzung eines Prepolymeren mit einer Vernetzerkomponente allgemein bekannte Katalysatoren (e) zugefügt werden. Die Katalysatoren (e) können einzeln wie auch in Abmischung miteinander zugegeben werden. Vorzugsweise sind dieses metallorganische Verbindungen, wie Zinn-(II)-Salze von organischen Carbonsäuren, z. B. Zinn-(II)-dioctoat, Zinn-(II)-dilaurat, Dibutylzinndiacetat und Dibutylzinndilaurat und tertiäre Amine wie Tetramethylethylendiamin, N-Methylmorpholin, Diethylbenzylamin, Triethylamin, Dimethylcyclohexylamin, Diazabicyclooctan, N,N'-Dimethylpiperazin, N-Methyl,N'-(4-N-Dimethylamino-)Butylpiperazin, N,N,N',N'',N''-Pentamethyldiethylendiamin oder ähnliche. Weiterhin kommen als Katalysatoren in Betracht: Amidine, wie z.B. 2,3-Dimethyl-3,4,5,6-tetrahydropyrimidin, Tris-(dialkylaminoalkyl)-s-hexahydrotriazine, insbesondere Tris-(N,N-dimethylaminopropyl)-s-hexahydrotriazin, Tetraalkylammoniumhydroxide, wie z.B. Tetramethylammoniumhydroxid, Alkalihydroxide, wie z.B. Natriumhydroxid, und Alkalialkoholate, wie z.B. Natriummethylat und Kaliumisopropylat, sowie Alkalisalze von langkettigen Fettsäuren mit 10 bis 20 C-Atomen und gegebenenfalls seitenständigen OH-Gruppen. Je nach einzustellender Reaktivität gelangen die Katalysatoren (e) in Mengen von 0,001 bis 0,5 Gew.%, bezogen auf die Vernetzerkomponente (ii), zur Anwendung.

Gegebenenfalls können in der Polyurethanherstellung übliche Treibmittel (f) verwendet werden. Geeignet sind beispielsweise niedrig siedende Flüssigkeiten, die unter dem Einfluss der exothermen Polyadditionsreaktion verdampfen. Geeignet sind Flüssigkeiten, welche gegenüber dem organischen Polyisocyanat inert sind und Siedepunkte unter 100°C aufweisen. Beispiele derartiger, vorzugsweise verwendeter Flüssigkeiten sind halogenierte, vorzugsweise fluorierte Kohlenwasserstoffe, wie z.B. Methylenchlorid und Dichlormonofluormethan, per- oder partiell fluorierte Kohlenwasserstoffe, wie z.B. Trifluormethan, Difluormethan, Difluorethan, Tetrafluorethan und Heptafluorpropan, Kohlendioxid, Kohlenwasserstoffe, wie z.B. n- und iso-Butan, n- und iso-Pentan sowie die technischen Gemische dieser Kohlenwasserstoffe, Propan, Propylen, Hexan, Heptan, Cyclobutan, Cyclopentan und Cyclohexan, Dialkylether, wie z.B. Dimethylether, Diethylether und Furan, Carbonsäureester, wie z.B. Methyl- und Ethylformiat, Ketone, wie z.B. Aceton, und/oder fluorierte und/oder perfluorierte, tertiäre Alkylamine, wie z.B. Perfluor-dimethyl-iso-propylamin. Auch Gemische dieser niedrigsiedenden Flüssigkeiten untereinander und/oder mit anderen substituierten oder unsubstituierten Kohlenwasserstoffen können verwendet werden. Als Treibmittel kommen ferner thermoplastische Kugeln enthaltend physikalische Treibmittel in Betracht, z.B. solche, die unter der Marke Expancell® am Markt erhältlich sind. Bevorzugt werden n- und/oder iso-Pentan und/oder Cyclopentan als Treibmittel (f) eingesetzt. Die zweckmäßigste Menge an niedrigsiedender Flüssigkeit zur Herstellung derartiger zellhaltiger elastischer Formkörper aus Urethan- und Harnstoffgruppen enthaltender Elastomere hängt ab von der Dichte, die man erreichen will, sowie von der Menge des erfindungsgemäßen Wassers (d). Im allgemeinen liefern Mengen von 0,5 bis 10 Gew.-%, vorzugsweise 1 bis 5 Gew.-%, bezogen auf das Gewicht der Vernetzerkomponente (ii), zufriedenstellende Ergebnisse. Besonders bevorzugt wird ausschließlich Wasser (d) als Treibmittel eingesetzt, insbesondere wenn die Komponenten (i) und (ii) mittels einer Hochdruckmaschine in die Form eingebracht werden. Werden die erfindungsgemäßen Formteile mittels der Niederdrucktechnik hergestellt, wird bevorzugt zusätzlich zum Wasser physikalisch wirkende Treibmittel eingesetzt, bevorzugt Kohlendioxid, n-Pentan, 2-Methylbutan und/oder Cyclopentan.

Bei der erfindungsgemäßen Herstellung der Formteile können Hilfsstoffe (g) eingesetzt werden. Dazu zählen beispielsweise allgemein bekannte oberflächenaktive Substanzen, Schaumstabilisatoren, Zellregler, Füllstoffe, Flammschutzmittel, Keimbildungsmittel, Oxidationsverzögerer, Stabilisatoren, Gleit- und Entformungshilfsmittel, Farbstoffe und Pigmente. Als oberflächenaktive Substanzen kommen z.B. Verbindungen in Betracht, welche zur Unterstützung der Homogenisierung der Ausgangsstoffe dienen und gegebenenfalls auch geeignet sind, die Zellstruktur zu regulieren. Genannt seien beispielsweise Emulgatoren, wie z.B. die Natriumsalze von Ricinusölsulfaten oder von Fettsäuren sowie Salze von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzol- oder Dinasphthylmethandisulfonsäure und Ricinolsäure; Schaumstabilisatoren, wie Siloxan-Oxalkylen-Mischpolymerisate und andere Organosiloxane, oxethylierte Alkylphenole, oxethylierte Fettalkohole, Paraffinöle, Ricinusöl- bzw. Ricinolsäureester, Türkischrotöl und Erdnußöl und Zellregler, wie Paraffine, Fettalkohole und Dimethylpolysiloxane. Zur Verbesserung der Emulgierwirkung, der Zellstruktur und/oder deren Stabilisierung eignen sich ferner oligomere Polyacrylate mit Polyoxyalkylen- und Fluoralkanresten als Seitengruppen. Die oberflächenaktiven Substanzen werden üblicherweise in Mengen von 0,01 bis 5 Gew.-Teilen, bezogen auf 100 Gew.-Teile Vernetzerkomponente (ii) angewandt.

Als Füllstoffe, inbesondere verstärkend wirkende Füllstoffe, sind die an sich bekannten, üblichen organischen und anorganischen Füllstoffe, Verstärkungsmittel und Beschwerungsmittel zu verstehen. Im einzelnen seien beispielhaft genannt: anorganische Füllstofe wie silikatische Mineralien, beispielsweise Schichtsilikate wie Antigorit, Serpentin, Hornblenden, Amphibole, Chrisotil, Talkum; Metalloxide, wie Kaolin, Aluminiumoxide, Aluminiumsilikat, Titanoxide und Eisenoxide, Metallsalze wie Kreide, Schwerspat und anorganische Pigmente, wie Cadmiumsulfid, Zinksulfid sowie Glaspartikel. Als organische Füllstoffe kommen beispielsweise in Betracht: Ruß, Melamin, Blähgraphit, Kollophonium, Cyclopentadienylharze und Pfropfpolymerisate. Als verstärkend wirkende Füllstoffe finden vorzugsweise Anwendung Fasern, beispielsweise Kohlefasern oder Glasfasern, besonders dann, wenn eine hohe Wärmeformbeständigkeit oder sehr hohe Steifigkeit gefordert wird, wobei die Fasern mit Haftvermittlern und/oder Schlichten ausgerüstet sein können. Die anorganischen und organischen Füllstoffe können einzeln oder als Gemische verwendet werden und werden der Vernetzerkomponente (ii) üblicherweise in Mengen von 0,5 bis 50 Gew.-%, vorzugsweise 1 bis 20 Gew.-% einverleibt.

Geeignete Flammschutzmittel sind beispielsweise Trikresylphosphat, Tris-(2-chlorethyl)phosphat, Tris-(2-chlorpropyl)phosphat, Tris-(1,3-dichlorpropyl)phosphat, Tris-(2,3-dibrompropyl)phosphat und Tetrakis-(2-chlorethyl)-ethylendiphosphat. Außer den bereits genannten halogensubstituierten Phosphaten können auch anorganische Flammschutzmittel wie roter Phosphor, Aluminiumoxidhydrat, Antimontrioxid, Arsentrioxid, Ammoniumpolyphosphat und Calciumsulfat oder Cyanursäurederivate, wie z.B. Melamin oder Mischungen aus mindestens zwei Flammschutzmitteln, wie z.B. Ammoniumphosphaten und Melamin sowie gegebenenfalls Stärke und/oder Blähgraphit zum Flammfestmachen der erfindungsgemäß hergestellten zelligen PU-Elastomere verwendet werden. Im allgemeinen hat es sich als zweckmäßig erwiesen, 1 bis 10 Gew.-% im zylindrischen Formkörper einzusetzen.

Als Keimbildungsmittel können z.B. Talkum, Calciumfluorid, Natriumphenylphosphinat, Aluminiumoxid und feinteiliges Polytetrafluorethylen in Mengen bis zu 5 Gew-%, bezogen auf das Gesamtgewicht des zylindrischen Formkörpers, eingesetzt werden. Geeignete Oxidationsverzögerer und Wärmestabilisatoren, die den erfindungsgemäßen zelligen PU-Elastomeren zugesetzt werden können, sind beispielsweise Halogenide von Metallen der Gruppe I des periodischen Systems, z.B. Natrium-, Kalium-, Lithium-Halogenide, gegebenenfalls in Verbindung mit Kupfer-(I)-Halogeniden, z.B. Chloriden, Bromiden oder Jodiden, sterisch gehinderte Phenole, Hydrochinone, sowie substituierte Verbindungen dieser Gruppen und Mischungen davon, die vorzugsweise in Konzentrationen bis zu 1 Gew-%, bezogen auf das Gesamtgewicht des zylindrischen Formkörpers, verwendet werden.

Gleit- und Entformungsmittel, die in der Regel ebenfalls in Mengen bis zu 1 Gew.-%, bezogen auf das Gesamtgewicht des zylindrischen Formkörpers, zugesetzt werden, sind Stearinsäure, Stearylalkohol, Stearinsäureester und -amide sowie die Fettsäureester des Pentaerythrits. Ferner können organische Farbstoffe, wie Nigrosin, Pigmente, wie z.B. Titandioxid, Cadmiumsulfid, Cadmiumsulfidselenid, Phthalocyanine, Ultramarinblau oder Ruß zugesetzt werden.

Nähere Angaben über die oben genannten anderen üblichen Hilfs- und Zusatzstoffe sind der Fachliteratur zu entnehmen.

Verwendung finden die erfindungsgemäßen zylindrischen bevorzugt hohlen Formkörper, im Folgenden auch als "Formkörper" bezeichnet, als Dämpfungselemente im Fahrzeugbau, beispielsweise im Automobilbau, z.B. als Zusatzfedern, Anschlagpuffer, Querlenkerlager, Hinterachsfahrschemellager, Stabilisator-Lager, Längsstreben-Lager, Federbein-Stützlager, Stoßdämpferlager, Lager für Dreieckslenker und/oder als auf der Felge befindliches Notrad, das beispielsweise bei einem Reifenschaden bewirkt, dass das Fahrzeug auf dem zelligen Polyisocyanat-Polyadditionsprodukt fährt und steuerbar bleibt.

Unter dem Ausdruck "zylindrisch" sind nicht nur Formkörper zu verstehen, die eine kreisrunde Grundfläche und einen konstanten Radius über die Höhe aufweisen, sondern auch Formkörper, die einen ovalen Querschnitt und/oder eine ovale Grundfläche besitzen. Auch Formkörper, bei denen lediglich Abschnitte entlang der Längsachse einen runden oder ovalen Querschnitt aufweisen, sind in dieser Schrift per Definition von dem Ausdruck "zylindrisch" umfasst. Ebenso fallen Formkörper unter diesen Begriff "zylindrisch", bei denen der Radius über die Länge variiert, bei denen also der Formkörper Einschnürungen und/oder Ausstülpungen aufweist. Bevorzugt sind zylindrische Formkörper, die einen kreisrunden Querschnitt ausweisen.

Unter dem Ausdruck "hohle" Formkörper sind in dieser Schrift per Definition solche Formkörper zu verstehen, die entlang der Längsachse, bevorzugt konzentrisch entlang der Längsachse eine Aushöhlung aufweisen. Bevorzugt ist unter dem Ausdruck "hohl" zu verstehen, dass in dem Formkörper ein durchgehender, bevorzugt konzentrischer Hohlraum entlang der gesamten Längsachse des Formkörpers vorliegt.

Durch die nachfolgenden Beispiele soll die Erfindung näher erläutert werden.

Beispiele:

Für die Versuche mit der Hochdrucktechnologie wurde eine Hochdruckmaschine der Fa. Krauss Maffei, Typ ECO II, mit einem MK 5/8 Umlenk-Mischkopf eingesetzt. Hierbei wurden die Formen mit einem Mischkopfausstoß von 15 - 60 g/s befüllt. Die Innenwand der Formen wiesen eine Temperatur von 40 - 90°C auf. Die Vermischung der Komponenten erfolgte im 5/8 Umlenker-Mischkopf mit speziell abgestimmten Düsen, bei denen Drücken, die zwischen 140 - 200 bar lagen, erreicht wurden. Die Herstellung der Formteile wurde bei einem NCO/OH-Verhältnis von 0,85 bis 1,2 (=Index) durchgeführt. Die Mischkopfauslauftemperaturen der gemischten Komponenten lag zwischen 40 - 60°C. Nach der Befüllung der Form wurde das Werkzeug zum Aufschäumen und Ausreagieren geschlossen. Nach 5 - 20 Minuten konnte der Formkörper entformt werden.

Die vergleichendenden Versuche mit der Niederdrucktechnologie erfolgten gießmaschinenseitig mit einem Eigenbau der Fa. Elastogran sowie mit einem speziell modifizierten F6 - Mischkopf der Fa.Krauss Maffei (ehemals Fa. EMB). Hierbei wurden die Formen mit einem Mischkopfausstoß von 15-60 g/s befüllt. Die Innenwand der Formen wiesen eine Temperatur von 40 - 90°C auf. Die Vermischung der Komponenten erfolgte in der Mischkammer mit einem dynamischen Rührsystem mit Rotationsgeschwindigkeiten von 1000 - 6000 min$^{-1}$. Die Komponenten wurden bei Drücken zwischen 2 - 20 bar zudosiert. Die Herstellung der Formteile wurde bei einem NCO/OH-Verhältnis von 0,85 bis 1,2 (=Index) durchgeführt Die Mischkopfauslauftemperaturen der gemischten Komponenten lag zwischen 40 - 60°C. Nach der Befüllung der Form wurde das Werkzeug zum Aufschäumen und Ausreagieren geschlossen. Nach 5 - 20 Minuten konnte der Formkörper entformt werden.

Die nachfolgende Rezeptur wurden mittels der vorstehend dargestellten Hoch- bzw. Niederdrucktechnik verschäumt.

Rezeptur 1 ($\overline{M}$(Polyol) :3600 g/mol)

1) Herstellung des NCO-gruppenhaltigen Prepolymeren

61,5 Gew.-Teile 4,4'-Diisocyanatodiphenylmethan (Lupranat® MES der BASF Aktiengesellschaft) und 2 Gew.-Teile uretoniminmodifiziertes MDI (Lupranat® MM 103 der BASF Aktiengesellschaft) wurden in einem Dreihalskolben unter Stickstoffatmosphäre aufgeschmolzen und bei 80°C unter Rühren mit einer Mischung aus 4 Gew.-Teile Tripropylenglykol und 32,5 Gew.-Teilen eines Polypropylenoxid (Propylenglykol als Startmolekül, Hydroxylzahl von 56 mg KOH/g, Molekulargewicht 1970 g/mol) versetzt. Die Mischung wurde zur vollständigen Umsetzung 1 Stunden auf 80°C erwärmt und anschließend abgekühlt. Es resultierte eine fast farblose Flüssigkeit mit einem NCO-Gehalt von 17,9 % und einer Viskosität von 800 mPas bei 25°C. Die Flüssigkeit war bei Raumtemperatur wochenlang lagerstabil.

2) Herstellung der Vernetzerkomponente:

| | |
|---|---|
| 46 Gew.-Teile | Polyoxypropylen (80 Gew.-%)-polyoxyethylen (20 Gew.-%)-glykol mit der Hydroxylzahl 29 mgKOH/g und dem Molekulargewicht 3410 g/mol, hergestellt unter Verwendung von Propylenglykol als Startmolekül |
| 37,6 Gew.-Teile | Polyoxypropylen (80 Gew.-%)-Polyoxyethylen (20 Gew.-%)-glykol mit der Hydroxylzahl 27 mg KOH/g und dem Molekulargewicht 5180 g/mol, hergestellt unter Verwendung von Glycerin als Startmolekül |
| 12,2 Gew.-Teile | Butandiol-1,4 |
| 0,3 Gew.-Teile | Wasser |
| 0,1 Gew.-Teile | Dibutylzinndilaurat |
| 0,3 Gew.-Teile | Schaumstabilisator auf Silikonbasis (DC 193 der Firma Dow Corning) |
| 1,9 Gew.-Teile | Mischung aus Lupragen® N 203 (BASF Aktiengesellschaft) und Niax® catalyst E-A-1 (GE Silicones), Katalysatoren |
| 1,6 Gew.-Teile | Cyclopentan |

3) Herstellung des zylindrischen Formkörpers

100 Gew.-Teile des Prepolymeren gemäß (1) wurden mit 114 Gew.-Teilen der Vernetzerkomponente gemäß (2) gemischt, die Mischung in ein auf 55°C temperiertes, verschließbares Formwerkzeug (z.B. mit der Federgeometrie gemäß Abb. 1) eingebracht und der Schaum bei 55°C für 12 min ausgehärtet. Nach Entformung des mikrozellulären Produktes wurde das Formteil 14 h bei 95°C thermisch nachgehärtet.

**Patentansprüche**

1. Verfahren zur Herstellung von zylindrischen Formkörpern auf der Basis von zelligen Polyurethanelastomeren mit einer Dichte nach DIN EN ISO 1798 zwischen 350 und 800 kg/m$^3$, einer Zugfestigkeit nach DIN EN ISO 1798 von $\geq 2{,}0$ N/mm$^2$, einer Dehnung nach DIN EN ISO 1798 von $\geq 200$ % und einer Weiterreißfestigkeit nach DIN ISO 34-1 B von $\geq 8$ N/mm durch Umsetzung eines Isocyanatgruppen aufweisenden Prepolymers (i) mit einer Vernetzerkomponente (ii) in einer Form, **dadurch gekennzeichnet, dass** das Isocyanatgruppen ausweisende Prepolymer (i) basiert auf Methylendiphenyldiisocyanat (MDI) und (b1) Polyetherdiol mit einem Molekulargewicht zwischen 1500 g/mol und 3000 g/mol auf der Basis von Propylenoxid und/oder Ethylenoxid und die Vernetzerkomponente (ii) enthält (b2) Polyetheralkohol mit einer nominellen Funktionalität gegenüber Isocyanaten von 2 bis 3 und einem Molekulargewicht zwischen 1500 g/mol und 6000 g/mol auf der Basis von Propylenoxid und/oder Ethylenoxid, sowie (c2) Diol mit einem Molekulargewicht zwischen 62 g/mol und 499 g/mol, (d) Wasser und (e) Katalysatoren, und man das Prepolymer (i) und die Vernetzerkomponente (ii) mittels einer Hochdruckmaschine, die einen Mischkopf aufweist, in dem die Komponenten (i) und (ii) gemischt werden, in die Form füllt, wobei der Mischkopfausstoß zwischen 15 und 60 g/s beträgt.

2. Verfahren gemäß Anspruch 1, **dadurch gekennzeichnet, dass** die Komponenten (i) und (ii) in dem Mischkopf jeweils eine Temperatur zwischen 25°C und 60°C aufweisen.

3. Verfahren gemäß Anspruch 1 oder 2, **dadurch gekennzeichnet, dass** die Mischkopfauslauftemperatur zwischen 40°C und 60°C beträgt.

4. Verfahren gemäß einem der Ansprüche 1 bis 3, **dadurch gekennzeichnet, dass** die Innenwand der Form eine Temperatur zwischen 40°C und 90°C aufweist.

5. Verfahren gemäß einem der Ansprüche 1 bis 4, **dadurch gekennzeichnet, dass** die Hochdruckmaschine einen Arbeitsdruck zwischen 140 und 200 bar aufweist.

6. Verfahren gemäß einem der Ansprüche 1 bis 5, **dadurch gekennzeichnet, dass** man die Umsetzung bei einem NCO/OH-Verhältnis von Prepolymer (i) und Vernetzerkomponente (ii) von 0,85 bis 1,2 durchführt.

7. Verfahren gemäß Anspruch 1, **dadurch gekennzeichnet, dass** die im zylindrischen Formkörper enthaltenen Polyole (b) enthaltend (b1) und (b2) eine mittlere Polyolmolmasse von kleiner als 4500 g/mol besitzen, wobei sich die mittlere Polyolmolmasse $\overline{M}$(Polyol) berechnet nach der folgenden Formel:

$$\overline{M}(Polyol) = \frac{(M_{b11} * m_{b11} + \ldots + M_{b1n} * m_{b1n}) * W_{b1} + (M_{b21} * m_{b21} + \ldots + M_{b2n} * m_{b2n}) * W_{b2}}{(m_{b11} + \ldots + m_{b1n}) * W_{b1} + (m_{b21} + \ldots + m_{b2n}) * W_{b2}}$$

mit den folgenden Bedeutungen:

$\overline{M}$(Polyol): mittlere Polyolmolmasse
$M_{b11}$ (bzw. $M_{b1n}$): Molmasse von Polyol b11 (bzw. Polyol b1n) im Prepolymer (i) in g/mol
$m_{b11}$ (bzw. $m_{b1n}$): Masse von Polyol b11 (bzw. Polyol b1n) in 100 g Prepolymer (i) in g
$W_{b1}$: Massenanteil des Prepolymers (i) im hohlen zylindrischen Formkörper
$M_{b21}$ (bzw. $M_{b2n}$): Molmasse von Polyol b21 bzw. (Polyol b2n) in der Vernetzerkomponente (ii) in g/mol
$m_{b21}$ (bzw. $m_{b2n}$): Masse von Polyol b21 (bzw. Polyol b2n) in 100 g Vernetzerkomponente (ii) in g
$W_{b2}$: Massenanteil der Vernetzerkomponente (ii) im hohlen zylindrischen Formkörper.

8. Verfahren gemäß Anspruch 1, **dadurch gekennzeichnet, dass** man in einem zweistufigen Verfahren in der ersten Stufe das Isocyanatgruppen aufweisende Prepolymer (i) herstellt durch Umsetzung von (a) Methylendiphenyldiisocyanat (MDI) mit (b1) Polyetherdiolen mit einem Molekulargewicht zwischen 1500 g/mol und 3000 g/mol auf der Basis von Propylenoxid und/oder Ethylenoxid sowie mit (c1) Diol mit einem Molekulargewicht zwischen 62 g/mol und 499 g/mol und dieses Prepolymer in der zweiten Stufe in einer Form mit der Vernetzerkomponente (ii) umsetzt.

9. Verfahren nach Anspruch 1, **dadurch gekennzeichnet, dass** das Prepolymer (i) basiert auf Methylendiphenyldüsocyanat (MDI) und Isocyanaten, die Carbodiimidstrukturen und/oder Uretoniminstrukturen aufweisen.

10. Verfahren nach Anspruch 1, **dadurch gekennzeichnet, dass** die Vernetzerkomponente als Treibmittel (f) n-Pentan, 2-Methylbutan und/oder Cyclopentan enthält.

**Claims**

1. A process for the production of cylindrical moldings based on cellular polyurethane elastomers having a density, according to DIN EN ISO 1798, of from 350 to 800 kg/m$^3$, a tensile strength, according to DIN EN ISO 1798, of $\geq$ 2.0 N/mm$^2$, an elongation, according to DIN EN ISO 1798, of $\geq$ 200% and a tear propagation resistance, according to DIN ISO 34-1 B, of $\geq$ 8 N/mm by reacting a prepolymer (i) having isocyanate groups with a crosslinking component (ii) in a mold, wherein the prepolymer (i) having isocyanate groups is based on methylenediphenyl diisocyanate (MDI) and (b1) polyetherdiol having a molecular weight of from 1500 g/mol to 3000 g/mol and based on propylene oxide and/or ethylene oxide, and the crosslinking component (ii) comprises (b2) polyetheralcohol having a nominal functionality with respect to isocyanates of from 2 to 3 and a molecular weight of from 1500 g/mol to 6000 g/mol and based on propylene oxide and/or ethylene oxide, and (c2) diol having a molecular weight of from 62 g/mol to 499 g/mol, (d) water and (e) catalysts, and the prepolymer (i) and the crosslinking component (ii) are introduced into the mold by means of a high pressure machine which has a mixing head in which the components (i) and (ii) are mixed, the mixing head output being from 15 to 60 g/s.

2. The process according to claim 1, wherein the components (i) and (ii) have a temperature of from 25°C to 60°C in each case in the mixing head.

3. The process according to claim 1 or 2, wherein the mixing head outflow temperature is from 40°C to 60°C.

4. The process according to any of claims 1 to 3, wherein the inner surface of the mold has a temperature of from 40°C to 90°C.

5. The process according to any of claims 1 to 4, wherein the high pressure machine has an operating pressure of from 140 to 200 bar.

6. The process according to any of claims 1 to 5, wherein the reaction is carried out at an NCO/OH ratio of prepolymer (i) to crosslinking component (ii) of from 0.85 to 1.2.

7. The process according to claim 1, wherein the polyols (b) present in the cylindrical molding and comprising (b1) and (b2) have an average polyol molar mass of less than 4500 g/mol, the average polyol molar mass $\overline{M}$(Polyol) being calculated according to the following formula:

$$\overline{M}(Polyol) = \frac{(M_{b11} \cdot m_{b11} + ... + M_{b1n} \cdot m_{b1n}) \cdot W_{b1} + (M_{b21} \cdot m_{b21} + ... + M_{b2n} \cdot m_{b2n}) \cdot W_{b2}}{(m_{b11} + ... + m_{b1n}) \cdot W_{b1} + (m_{b21} + ... + m_{b2n}) \cdot W_{b2}}$$

where:

$\overline{M}$(Polyol) : Average polyol molar mass
$M_{b11}$ (or $M_{b1n}$) : Molar mass of polyol b11 (or polyol b1n) in the prepolymer (i) in g/mol
$m_{b11}$ (or $M_{b1n}$) : Mass of polyol b11 (or polyol b1n) in 100 g of prepolymer (i) in g
$W_{b1}$: Mass fraction of the prepolymer (i) in the hollow cylindrical molding

$M_{b21}$ (or $M_{b2n}$) : Molar mass of polyol b21 (or polyol b2n) in the crosslinking component (ii) in g/mol

$m_{b21}$ (or$m_{b2n}$): Mass of polyol b21 (or polyol b2n) in 100 g of crosslinking component (ii) in g

$W_{b2}$: Mass fraction of the crosslinking component (ii) in the hollow cylindrical molding.

8. The process according to claim 1, wherein, in a two-stage process, the prepolymer (i) having isocyanate groups is prepared in the first stage by reacting (a) methylenediphenyl diisocyanate (MDI) with (b1) polyetherdiols having a molecular weight of from 1500 g/mol to 3000 g/mol and based on propylene oxide and/or ethylene oxide and with (c1) diol having a molecular weight of from 62 g/mol to 499 g/mol, and this prepolymer is reacted in the second stage in a mold with the crosslinking component (ii).

9. The process according to claim 1, wherein the prepolymer (i) is based on methylenediphenyl diisocyanate (MDI) and isocyanates which have carbodiimide structures and/or uretonimine structures.

10. The process according to claim 1, wherein the crosslinking component comprises, as blowing agent (f), n-pentane, 2-methylbutane and/or cyclopentane.

## Revendications

1. Procédé de fabrication de corps de moulage cylindriques à base d'élastomères alvéolaires en polyuréthane, présentant une masse volumique, selon la norme DIN EN ISO 1798, comprise entre 350 et 800 kg/m³, une résistance à la traction, selon la norme DIN EN ISO 1798, d'une valeur ≥ 2,0 N/mm², un allongement, selon la norme DIN EN ISO 1798, d'une valeur ≥ 200 % et une résistance à la propagation de la déchirure, selon la norme DIN ISO 34-1 B, d'une valeur ≥ 8 N/mm, en faisant réagir un prépolymère présentant des groupes isocyanate (i) avec un composant de réticulation (ii) dans un moule, **caractérisé en ce que** le prépolymère présentant des groupes isocyanate (i) est constitué de diisocyanate de méthylènediphényle (MDI) et d'un (b1) polyéther-diol ayant un poids moléculaire compris entre 1500 g/mole et 3000 g/mole à base d'oxyde de propylène et/ou d'oxyde d'éthylène, et **en ce que** le composant de réticulation (ii) contient (b2) un polyéthéralcool ayant une fonctionnalité nominale vis-à-vis des isocyanates de 2 à 3 et présentant un poids moléculaire compris entre 1500 g/mole et 6000 g/mole à base d'oxyde de propylène et/ou d'oxyde d'éthylène, ainsi que (c2) un diol présentant un poids moléculaire compris entre 62 g/mole et 499 g/mole, (d) de l'eau et (e) des catalyseurs, puis on verse le prépolymère (i) et le composant de réticulation (ii) dans le moule à l'aide d'une machine à haute pression, qui présente une tête de mélange, dans laquelle les composants (i) et (ii) sont mélangés, le débit observé au niveau de la tête de mélange étant compris entre 15 et 60 g/s.

2. Procédé selon la revendication 1, **caractérisé en ce que** les composants (i) et (ii) présentent, respectivement, une température comprise entre 25 °C et 60 °C dans la tête de mélange.

3. Procédé selon la revendication 1 ou 2, **caractérisé en ce que** la température au niveau de la sortie de la tête de mélange est comprise entre 40 °C et 60 °C.

4. Procédé selon l'une quelconque des revendications 1 à 3, **caractérisé en ce que** la paroi interne du moule présente une température comprise entre 40 °Ç et 90 °C.

5. Procédé selon l'une quelconque des revendications 1 à 4, **caractérisé en ce que** la machine à haute pression présente une pression d'exploitation comprise entre 140 et 200 bars.

6. Procédé selon l'une quelconque des revendications 1 à 5, **caractérisé en ce que** l'on effectue la réaction dans un rapport NCO:OH du prépolymère (i) au composant de réticulation (ii) d'une valeur de 0,85 à 1,2.

7. Procédé selon la revendication 1, **caractérisé en ce que** les polyols (b) contenus dans le corps de moulage cylindrique et contenant les composants (b1) et (b2), présentent une masse molaire moyenne du polyol inférieure à 4500 g/mole, la masse molaire moyenne du polyol $\overline{M}$ (polyol) étant calculée en utilisant la formule suivante :

$$\overline{M}(Polyol) = \frac{(M_{b11} * m_{b11} + ... + M_{b1n} * m_{b1n}) * W_{b1} + (M_{b21} * m_{b21} + ... + M_{b2n} * m_{b2n}) * W_{b2}}{(m_{b11} + ... + m_{b1n}) * W_{b1} + (m_{b21} + ... + m_{b2n}) * W_{b2}}$$

avec les définitions suivantes :

$\overline{M}$ (Polyol) : Masse molaire moyenne du polyol

$M_{b11}$ (ou $M_{b1n}$) : Masse molaire du polyol b11 (ou polyol b1n) dans le prépolymère (i), exprimée en g/mole

$m_{b11}$ (ou $m_{b1n}$) : Masse du polyol b11 (ou polyol b1n) dans 100 g de prépolymère (i), exprimée en g

$W_{b1}$ : Fraction massique du prépolymère (i) dans le corps de moulage creux cylindrique

$M_{b21}$ (ou $M_{b2n}$) : Masse molaire du polyol b21 (ou polyol b2n) dans le composant de réticulation (ii), exprimée en g/mole

$m_{b21}$ (ou $m_{b2n}$) : Masse du polyol b21 (ou polyol b2n) dans 100 g de composant de réticulation (ii), exprimée en g

$W_{b2}$ : Fraction massique du composant de réticulation (ii) dans le corps de moulage creux cylindrique.

8. Procédé selon la revendication 1, **caractérisé en ce que** l'on fabrique, dans le cadre d'un procédé en deux étapes, lors de la première étape, le prépolymère présentant des groupes isocyanate (i) en faisant réagir (a) le diisocyanate de méthylènediphényle (MDI) avec (b1) des polyétherdiols présentant un poids moléculaire compris entre 1500 g/mole et 3000 g/mole, à base d'oxyde de propylène et/ou d'oxyde d'éthylène, et avec (c1) un diol présentant un poids moléculaire compris entre 62 g/mole et 499 g/mole et **en ce que** l'on fait réagir, lors de la deuxième étape, ce prépolymère dans un moule avec le composant de réticulation (ii).

9. Procédé selon la revendication 1, **caractérisé en ce que** le prépolymère (i) est constitué de diisocyanate de méthylènediphényle (MDI) et d'isocyanates présentant des structures de type carbodiimide et/ou urétonimine.

10. Procédé selon la revendication 1, **caractérisé en ce que** le composant de réticulation contient, comme agent d'expansion (f), du n-pentane, du 2-méthylbutane et/ou du cyclopentane.

**Figur 1**

**Figur 2**

**IN DER BESCHREIBUNG AUFGEFÜHRTE DOKUMENTE**

**In der Beschreibung aufgeführte Patentdokumente**

- DE 3613650 A
- EP 178562 A
- WO 9611219 A
- DE 4438143 C